# EUROPÄISCHE PATENTSCHRIFT

(11) **EP 3 349 626 B1**
(45) Veröffentlichungstag und Bekanntmachung des Hinweises auf die Patenterteilung: **24.06.2020**
(21) Anmeldenummer: 16763551.5
(22) Anmeldetag: 13.09.2016
(51) Int. Cl.: A47J 31/52, A47J 31/36, A47J 31/46

(54) **VERFAHREN UND VORRICHTUNG ZUM ZUBEREITEN EINES KAFFEEGETRÄNKS**
METHOD AND DEVICE FOR PREPARING A COFFEE DRINK
PROCÉDÉ ET DISPOSITIF POUR LA PRÉPARATION D'UNE BOISSON À BASE DE CAFÉ

(30) Priorität: 18.09.2015 DE 102015217999
(43) Veröffentlichungstag der Anmeldung: 25.07.2018
(73) Patentinhaber: FRANKE Kaffeemaschinen AG, 4663 Aarburg (CH)
(72) Erfinder: VETTERLI, Heinz, 8855 Wangen (CH); MÜLLER, Simon, 5035 Unterentfelden (CH); TURI, Mariano, 8046 Zürich (CH)
(74) Vertreter: Lemcke, Brommer & Partner Patentanwälte Partnerschaft mbB
(86) Internationale Anmeldenummer: PCT/EP2016/071586
(87) Internationale Veröffentlichungsnummer: WO 2017/046100

(56) Entgegenhaltungen:
- EP-A1- 2 570 056
- WO-A1-2007/076567
- WO-A1-2014/177925
- KR-A- 20120 117 529
- US-A1- 2015 216 355
- US-A1- 2015 216 355

## Beschreibung

Die vorliegende Erfindung betrifft ein Verfahren und eine zugehörige Vorrichtung zum Zubereiten eines Kaffeegetränks, bei dem in einem Brühvorgang eine vorgebbare Gesamtmenge an Brühwasser durch eine Menge an Kaffeepulver geleitet wird.

Am Markt befindliche Kaffeemaschinen wie etwa Kaffeevollautomaten oder Espressomaschinen weisen eine Brühkammer auf, in die Pulverkaffee eingefüllt wird, der Pulverkaffee gegebenenfalls verdichtet wird und anschließend unter Druck Heißwasser durchgeleitet wird. Teilweise weisen solche Maschinen zusätzlich ein Mahlwerk auf, mit dem Kaffeebohnen frisch gemahlen werden.

In der EP 1 133 944 B1 wird vorgeschlagen, hinter der Brühkammer ein mechanisches Regelventil vorzusehen, bei dem eine Feder bestrebt ist, einen Ventilkörper in der Offenstellung zu halten, und bei dem der Ventilkörper vom unter Druck stehenden Kaffeegetränk entgegen der Vorspannkraft der Feder in Schließrichtung verschließbar ist. Die beschriebene Regelventileinrichtung dient dazu, die relative Durchflussrate innerhalb eines gewissen Rahmens konstant zu halten. Mittels einer Stellschraube kann die Federvorspannung und damit die gewünschte Durchflussrate manuell reguliert werden.

Die Schrift US 2015/0216355 A1 beschreibt eine Brühvorrichtung, bei welcher Druck, Temperatur und Durchflussrate unabhängig voneinander eingestellt werden können. Hierzu ist hinter der Brühkammer ein Gegendruckventil angeordnet, über welches der Druck in der Brühkammer eingestellt wird. Die Durchflussrate ist über eine volumetrische Pumpe, mit der das Brühwasser gefördert wird, druckunabhängig einstellbar.

Die Schrift KR 2012 0117529 A zeigt eine Kapselbrühvorrichtung mit einem in Flussrichtung hinter der Kapsel angeordneten Magnetventil, welches zum An- und Abstellen eines Getränkestroms geöffnet und geschlossen werden kann.

Bei bekannten Kaffeemaschinen wird beobachtet, dass Geschmack und Qualität des gebrühten Kaffees starken Schwankungen unterworfen ist. Neben der verwendeten Kaffeesorte und -menge haben bei derzeit am Markt befindlichen Kaffeemaschinen vor allem der Mahlgrad des Kaffees und der Verdichtungsgrad des Kaffeepulvers in der Brühkammer einen wesentlichen Einfluss auf den Geschmack des gebrühten Kaffeegetränks. Daneben wird jedoch häufig auch beobachtet, dass nach einer längeren Standzeit der Kaffeemaschine der erste bezogene Kaffee in Geschmack und Qualität stark hinter den Erwartungen zurückbleibt und sogar weggeschüttet werden muss. Jedoch auch im laufenden Betrieb bei ansonsten gleichbleibenden Bedingungen sind Schwankungen in Qualität und Geschmack der bezogenen Kaffeegetränke zu verzeichnen.

Die Erfindung hat sich daher zur Aufgabe gesetzt, die geschmackliche Qualität frisch gebrühter Kaffeegetränke zu steigern, zumindest jedoch die Konstanz in der geschmacklichen Ausprägung nacheinander zubereiteter Kaffeegetränke zu erhöhen.

Die Aufgabe wird gelöst durch ein Verfahren nach Anspruch 1 und eine Brühvorrichtung nach Anspruch 6. Vorteilhafte Ausgestaltungen sind den abhängigen Ansprüchen zu entnehmen.

Bei einem Verfahren der vorgenannten Art wird die Aufgabe dadurch gelöst, dass für den Brühvorgang eine Gesamtdurchflusszeit vorgegeben oder vorgebbar ist, in welcher die Gesamtmenge an Brühwasser durch eine Menge an Kaffeepulver geleitet wird.

Während im Stand der Technik die Überzeugung bestand, dass die wesentlichen Einflussgrößen für die Geschmacksausprägungen von Kaffeegetränken der Mahlgrad des Kaffeepulvers und dessen Verdichtungsgrad in der Brühkammer sind, haben sensorische Untersuchungen der Anmelderin gezeigt, dass bei einer Regelung auf eine konstante Durchflusszeit mit Kaffeepulver unterschiedlichen Mahlgrads geschmacklich und qualitativ nahezu identische Kaffeegetränke zubereitet werden können. Dies ist eine unerwartete und durchaus überraschende Erkenntnis, denn bisher war man davon ausgegangen, dass der Geschmack eines Kaffeegetränkes wesentlich durch den Mahlgrad, also die Korngröße, des Kaffeepulvers beeinflusst wird, und hatte vor allem zur Zubereitung von Kaffeegetränken der Geschmacksrichtung "Espresso" möglichst feine Kaffeemahlungen verwendet.

Die vorliegende Erfindung gelangt nun zu der Erkenntnis, dass unabhängig vom Mahlgrad und der Verdichtung des Kaffeepulvers, geschmacklich und qualitativ so gut wie nicht unterscheidbare Kaffeegetränke zubereitet werden können, wenn lediglich die Gesamtdurchflusszeit des Brühwassers durch die Kaffeemahlung dieselbe ist. Hierbei spielt es auch keine wesentliche Rolle, ob das Brühwasser anfangs schneller oder weniger schnell durchläuft, solange diese Unterschiede nur durch eine Nachregelung der Durchflussrate über den gesamten Brühvorgang hin zu einer konstanten Gesamtdurchflusszeit ausgeglichen werden. Läuft das Brühwasser also wegen einer gröberen Mahlung anfangs schneller durch, so wird durch entsprechende Nachregelung erfindungsgemäß dafür Sorge getragen dass das verbleibende, noch durchzuleitende Brühwasser entsprechend langsamer durchläuft und umgekehrt.

Der Anmelderin ist es auf diese Weise sogar gelungen, entgegen der bisherigen Überzeugung der Fachwelt, mit etwas gröberen Mahlungen sensorisch bessere Kaffeegetränke der Geschmacksrichtung "Espresso" zuzubereiten als mit speziellen, besonders feinen Espressomahlungen, was nach Erkenntnissen der Anmelderin darauf zurückgeführt wird, dass durch zu feine Mahlung Aromen aus dem Kaffee verloren gehen.

Somit ist das erfindungsgemäße Brühverfahren mit konstanter Gesamtdurchlaufzeit geeignet, Unterschiede im Mahlgrad des Kaffeepulvers nahezu vollständig auszugleichen, sodass beim Zubereiten von Kaffeegetränken aus frisch gemahlenen Kaffeebohnen technisch wesentlich einfachere und somit kostengünstigere Mahlwerke eingesetzt werden können.

Andererseits ermöglicht das erfindungsgemäße Brühverfahren durch gezielte Veränderung der Durchflusszeit unter Einsatz von Kaffeepulver desselben Mahlgrades, Getränke mit unterschiedlichen sensorischen Ausprägungen zu extrahieren. Darüber hinaus ermöglicht eine Optimierung der Auslaufzeit bei im Wesentlichen gleichbleibender Qualität des Kaffeegetränks den Einsatz einer geringeren Menge Kaffeepulver, sodass das erfindungsgemäße Brühverfahren auch zu einer Einsparung an Kaffeepulver führt.

Eine Einstellung der gewünschten Gesamtdurchflusszeit kann im Rahmen der vorliegenden Erfindung durch eine Regelung der Durchflussrate über die Dauer des Brühvorgangs erzielt werden. Insbesondere liegt hierbei eine aktive Flussregelung des Brühwassers im Rahmen der vorliegenden Erfindung. Eine Regelung der Durchflussrate des Brühwassers über den Brühvorgang erfolgt hierbei vorzugsweise automatisiert.

Bei dem erfindungsgemäßen Brühverfahren ist demnach vorgesehen, dass für den Brühvorgang eine Gesamtdurchflusszeit vorgegeben ist, in welcher die Gesamtmenge an Brühwasser durch das Kaffeepulver geleitet wird, dass während des Brühvorgangs kontinuierlich oder zumindest mehrmals ein Wert für den Volumenstrom des Brühwassers bestimmt wird, und aus den gemessenen Volumenstromwerten die Menge des bereits durchgeleiteten oder des noch durchzuleitenden Brühwassers ermittelt wird, dass die Durchleitung des Brühwassers unter Druck erfolgt und eine aktive Flussregelung des Brühwassers durchgeführt wird, indem mittels eines einstellbaren Gegendruckventils ein Gegendruck angelegt wird und dass während des Brühvorgangs die Durchflussrate des Brühwassers zur Erreichung der Gesamtdurchflusszeit in Abhängigkeit der Menge des bereits durchgeleiteten oder des noch durchzuleitenden Brühwassers derart geregelt wird, dass der Brühvorgang in der vorgegebenen Gesamtdurchflusszeit durchgeführt wird.

Im Rahmen der Erfindung wird hierzu kontinuierlich oder zumindest mehrmals die Menge des bereits durchgeleiteten oder des noch zu durchzuleitenden Brühwassers bestimmt, um das Gegendruckventil in Abhängigkeit der hiermit bestimmten Menge anzusteuern, sodass der Brühvorgang in der vorgegebenen Gesamtdurchflusszeit durchgeführt wird. Je nachdem, ob noch mehr oder weniger Brühwasser bei vorgegebener Gesamtbrühwassermenge in der verbleibenden Zeitspanne bis zum Erreichen der vorgegebenen Gesamtdurchflusszeit durch die Brühkammer durchgeleitet werden muss, wird das Gegendruckventil weiter geöffnet oder weiter geschlossen, um den Volumenstrom zu erhöhen bzw. zu verringern.

Mittels Durchleitung des Brühwassers unter Druck lassen sich qualitativ hervorragende Kaffeegetränke zubereiten. Hierbei kann eine zusätzliche Flussregelung des Brühwassers durch Regeln des Drucks erfolgen. Eine Regelung des Drucks ist auf einfache Weise realisierbar, indem die Drehzahl einer Wasserpumpe, mit der der Druck erzeugt wird, geregelt wird, beispielsweise durch Pulsweitenmodulation der Versorgungsspannung. Der Druck liegt hierbei vorzugsweise im Bereich zwischen 2 und 25 bar, weiter vorzugsweise zwischen 5 und 20 bar und höchstvorzugsweise zwischen 8 und 15 bar.

Eine Flussregelung des Brühwassers erfolgt jedoch vorrangig durch Anlegen eines Gegendrucks über ein auslassseitiges Gegendruckventil. Dies ist besonders vorteilhaft, da bei höherem Druck vor allem zur Zubereitung von Espresso-Kaffeegetränken eine schönere Crema erzeugt wird. Die Crema eines Espresso bindet einen großen Teil des Espressoaromas und ist somit für ein als qualitativ hochwertig empfundenen Espresso-Kaffeegetränk von besonderer Bedeutung. Zur Regelung des Gegendrucks kann hierbei insbesondere ein einstellbares Gegendruckventil verwendet werden.

Bei einer bevorzugten Weiterbildung der Erfindung ist die Steuerung selbstlernend programmiert, sodass sie aus einem oder mehreren unmittelbar vorausgegangenen Brühvorgängen eine Größe ermittelt, um die ein Flüssigkeitsdurchfluss durch das Gegendruckventil in einer Startphase nach Beginn des Brühvorgangs nach Einsetzen eines Flüssigkeitsstromes gedrosselt werden muss, um die angestrebte Gesamtdurchlaufzeit oder eine vorgesehene Durchflussrate zu erreichen. Es hat sich nämlich herausgestellt, dass gerade in der Startphase nach Beginn des Brühvorgangs ein stark schwankendes Durchlaufverhalten zu beobachten ist, welches möglicherweise durch thermische Ausdehnungseffekte oder elastisches Materialverhalten im Bereich des Gegendruckventils zu erklären ist. Insbesondere bei der Verwendung eines von einem Schrittmotor angetriebenen Nadelventils muss das Gegendruckventil in der Startphase teils in beträchtlichem Umfang nachgeregelt werden, um den gewünschten Durchfluss zu erzielen. Hier hat es sich als vorteilhaft herausgestellt, aus unmittelbar vorangegangenen Brühvorgängen zu lernen und zu übernehmen, in welchem Maß das Ventil bei Beginn des Brühverfahrens geöffnet und nach Einsetzen des Flüssigkeitsstroms gegebenenfalls nachgeregelt werden muss.

Diese Größe kann beispielsweise eine Schrittanzahl sein, um die das von einem Schrittmotor angetriebene Gegendruckventil zu Beginn des Brühvorgangs geöffnet und gegebenenfalls nach Einsetzen eines Flüssigkeitsstroms wieder geschlossen wird. Diese erlernte Schrittzahl wird dann bei einem neuen Brühvorgang zunächst ausgeführt, bevor die erfindungsgemäße Gegendruckregelung in Abhängigkeit der bereits durchgeleiteten oder noch durchzuleitenden Wassermenge einsetzt.

Das erfindungsgemäße Verfahren kann letztlich bei allen bekannten Kaffeemaschinen wie beispielsweise Siebträgermaschinen angewendet werden. Bei einer bevorzugten Ausführungsform wird das Brühverfahren bei Kaffeemaschinen mit Brühkammer eingesetzt. Hierbei wird das Kaffeepulver in eine Brühkammer der Kaffeemaschine eingebracht und das Brühwasser wird in der vorgegebenen Gesamtdurchlaufzeit durch die Brühkammer geleitet. Dabei wird die Durchlaufzeit durch Ansteuerung eines in Durchflussrichtung hinter der Brühkammer angeordnetes Gegendruckventil geregelt.

Als Messgröße und Eingangswert für die eine Gegendruck-Flussregelung können gemessene Volumenstromwerte, die beispielsweise mittels eines im Wasserzulauf befindlichen Durchflusssensors ermittelt werden, verwendet werden. Aus diesen kann auf einfache Weise die Menge des bereits durchgeleiteten Brühwassers, beispielsweise mittels eines PID-Reglers durch Integration, bestimmt werden.

Eine erfindungsgemäße Brühvorrichtung weist dementsprechend eine Steuerung auf, mittels der für den Brühvorgang eine Gesamtdurchflusszeit vorgegeben oder vorgebbar ist, in welcher die Gesamtmenge an Brühwasser durch eine Menge an Kaffeepulver geleitet wird. Insbesondere kann die Steuerung als PID-Regler ausgebildet sein.

Außerdem besitzt die Brühvorrichtung eine druckbeaufschlagbare Brühkammer zur Aufnahme des Kaffeepulvers und zum Durchleiten des Brühwasser während des Brühvorgangs und einen Druckerzeuger zum Erzeugen eines Druckes, mit dem das Brühwasser zum Durchleiten durch die Brühkammer druckbeaufschlagt wird. Hierbei wird ein von einem stromabwärts der Brühkammer angeordneten Gegendruckventil erzeugter Gegendruck von der Steuerung geregelt.

Die Brühvorrichtung ist außerdem mit einer Messeinrichtung zur Bestimmung eines Volumenstroms des Brühwassers ausgerüstet. Die Steuerung ermittelt aus gemessenen Volumenstromwerten kontinuierlich oder zumindest mehrmals die Menge des bereits durchgeleiteten oder des noch durchzuleitenden Brühwassers und regelt in Abhängigkeit davon während des Brühvorgangs die Durchflussrate des Brühwassers über das Gegendruckventil derart, dass der Brühvorgang in der vorgegebenen Gesamtdurchflusszeit durchgeführt wird.

Eine solche Messvorrichtung kann vorzugsweise einen Durchflusssensor umfassen. Ein solcher Durchflusssensor oder Flowmeter misst die aktuelle Durchflussrate bzw. den Volumendurchfluss durch den vorgegebenen Leitungsquerschnitt. Durch Integration über den Volumenstrom kann die Menge des bereits durchgeleiteten Brühwassers bestimmt werden. Ein entsprechender Durchflusssensor kann entweder in einer Frischwasserzuleitung, zwischen einem Boiler zum Erhitzen des Brühwassers und der Brühkammer oder auch hinter der Brühkammer im Auslauf für das fertig gebrühte Kaffeegetränk angeordnet werden. Ein solcher Durchflusssensor kann gleichzeitig zur Portionierung des Kaffeegetränks, also zum Abmessen der vorgebbaren Gesamtmenge an Brühwasser verwendet werden, so dass hierdurch ein weiterer Synergieeffekt erreicht werden kann. Vorzugsweise befindet sich ein solcher Durchflusssensor im Kaltbereich, also vor einem zur Erhitzung des Brühwassers verwendeten Boilers, da hier die Wassermenge am genauesten gemessen werden kann, da sie nicht durch etwaige Dampfblasen und damit einhergehende Volumenvergrößerung in der Flüssigkeit beeinträchtigt wird.

Bei einer besonders bevorzugten Ausführungsform kann ein Gegendruckventil in Form eines motorisch betriebenen Drosselventils, insbesondere Nadelventils, zur Erzeugung eines Gegendrucks eingesetzt werden, welches die Steuerung durch Ansteuerung eines entsprechenden Antriebsmotors graduell öffnet oder schließt. Alternativ kann das Gegendruckventil jedoch auch als getaktetes Magnetventil ausgebildet werden, bei dem durch periodisches Öffnen und Schließen ein mittlerer Flüssigkeitsdurchfluss einstellbar ist. Die Steuerung ist in diesem Fall ausgebildet, den mittleren Flüssigkeitsdurchfluss durch Vorgabe einer Umschaltfrequenz und/oder eines Tastverhältnisses zwischen geöffnetem und geschlossenem Zustand zu beeinflussen. Ein solches getaktetes Magnetventil wird vorzugsweise bei einer hohen Schaltfrequenz von unter 1 Hz, vorzugsweise zwischen 1 und 60 Hz, weiter vorzugsweise zwischen 5 und 30 Hz und höchstvorzugsweise zwischen 10 und 20 Hz. Betrieben, damit sich ein stabiler mittlerer Flüssigkeitsdurchfluss einstellt.

Die vorliegende Erfindung betrifft außerdem eine Kaffeemaschine mit einer vorgenannten Brühvorrichtung. Eine solche Kaffeemaschine bzw. Kaffeevollautomat kann vorzugsweise ein Mahlwerk zum Mahlen von Kaffeebohnen zu Kaffeepulver aufweisen. Dieses kann wegen der synergetischen Wirkung der Erfindung, Unterschiede im Mahlgrad auszugleichen und gerade bei gröberer Mahlung geschmacklich hervorragende Kaffeegetränke zuzubereiten, wesentlich einfacher und technisch weniger aufwendig aufgebaut sein, als die heute in Premiummaschinen verwendeten Mahlwerke, welche für besonders feine Kafeemahlungen ausgelegt sind. Daneben kann die erfindungsgemäße Brühvorrichtung vorzugsweise auch in einer sogenannten Portionskaffeemaschine, also einer Kaffeemaschine welche vorportionierte Kaffeekapseln oder Kaffeepads verwendet, weiter vorzugsweise in einer Kapselkaffeemaschine, eingesetzt werden.

Weitere Vorteile und Eigenschaften der Erfindung ergeben sich anhand der Ausführungsbeispiele und der eingefügten Zeichnungen. Hierbei zeigen:
- Figur 1: ein schematisches Wasserlaufschema der erfindungsgemäßen Brühvorrichtung,
- Figur 2: eine Schnittzeichnung eines im Rahmen der Erfindung zur Gegendruck-Flussregelung verwendeten Nadelventils,
- Figur 2a: eine Detailzeichnung der Ventilnadel und Ventilöffnung aus Figur 2,
- Figur 3: ein Diagramm zum zeitlichen Verlauf der Steuersignale während eines Brühvorgangs,
- Figur 4: ein zeitliches Diagramm des Soll-Wertes und des gemessenen IstWertes der Gegendruck-Flussregelung während eines Brühvorgangs,
- Figur 5: ein zeitliches Diagramm mit dem Verlauf einer Regelkurve für die Ventilstellung in Schritten eines zur Ansteuerung des Ventils dienenden Schrittmotors und der Ist-Wert der von einem Durchflusssensor gemessenen Durchflussrate und
- Figur 6: ein zweites Ausführungsbeispiel einer erfindungsgemäßen Brühvorrichtung.

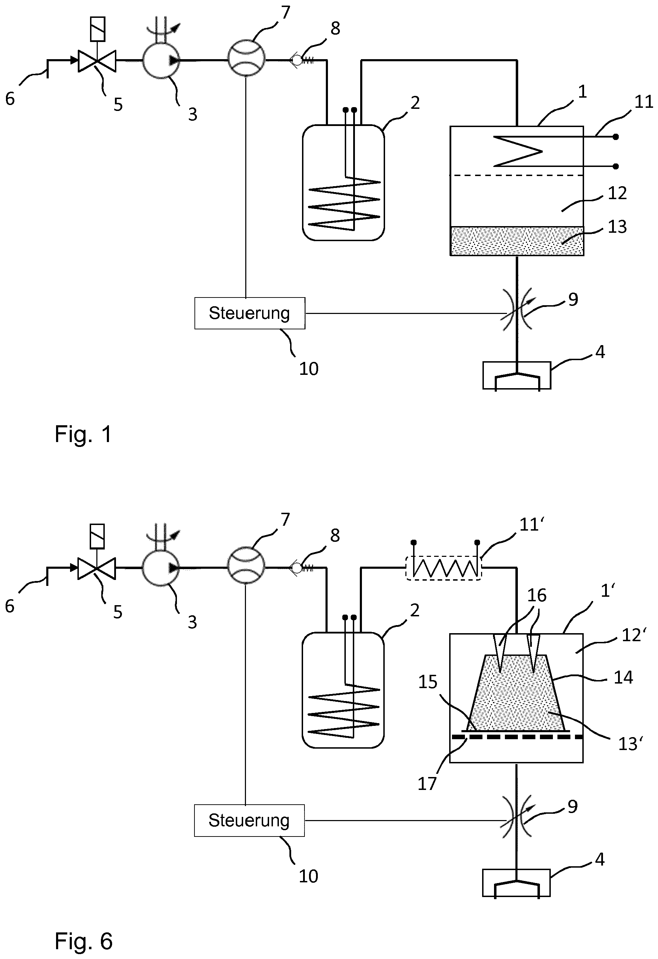

In Figur 1 ist in einem sogenannten Wasserlaufschema der Aufbau einer Brühvorrichtung zur Zubereitung von Kaffeegetränken gezeigt, die beispielsweise in einem Kaffeevollautomaten verwendet werden kann. Die Brühvorrichtung umfasst eine Brühgruppe 1, einen Heißwasserboiler 2, eine zulaufseitige Wasserpumpe 3 und einen Auslauf 4 zur Ausgabe frisch gebrühter Kaffeegetränke. In Flussrichtung vor der Wasserpumpe 3 befindet sich ein Hauptwasserventil 5, über welches die Brühvorrichtung an eine Trinkwasserzuleitung 6 angeschlossen wird. Druckseitig ist die Pumpe 3 über einen Durchflusssensor 7, häufig auch als Flowmeter bezeichnet, und ein Rückschlagventil 8 mit dem Zulauf des Heißwasserboilers 2 verbunden. Heißwasser aus dem Boiler 2 wird der Brühgruppe 1 zugeführt. Zwischen der Brühgruppe 1 und dem Auslauf 4 befindet sich ein regelbares Gegendruckventil 9, welches von einer Steuerung 10 in Abhängigkeit der Messwerte des Durchflusssensors 7 angesteuert wird. Die Steuerung 10 kann hierbei durch einen Mikroprozessor realisiert werden, in dem auch andere Steuer- und Regelvorgänge in einem Kaffeevollautomat implementiert sein können.

Die Brühgruppe umfasst in an sich bekannter Weise eine Heizung 11, mit der die Brühgruppe vorgewärmt und warm gehalten wird, und eine Brühkammer 12, in die portioniertes, frisch gemahlenes Kaffeepulver 13 eingefüllt wird. Eine Brühgruppe, die im Rahmen der vorliegenden Erfindung eingesetzt werden kann, ist beispielsweise in der EP 2561778 A1 beschrieben, auf die, um unnötige Wiederholungen zu vermeiden, hiermit vollinhaltlich Bezug genommen wird.

Die Brühgruppe 1 ist so ausgestaltet, dass sie geöffnet werden kann, um eine portionierte Menge Kaffeepulver einzufüllen, welches zuvor in einer Mühle des Kaffeevollautomaten portionsweise frisch gemahlen wurde. Außerdem kann bei geöffneter Brühgruppe nach dem Brühvorgang der verbleibende Kaffeesatz in einen Tresterbehälter ausgeworfen werden. Die Brühgruppe weist außerdem einen beweglichen Kolben auf (nicht dargestellt), der das eingefüllte Kaffeepulver gegen ein in der Brühkammer befindliches Brühsieb verdichtet. Nach Zurückfahren des Kolbens kann das so verdichtete Kaffeepulver von dem unter Druck stehenden Brühwasser durchströmt werden.

Der von der Pumpe 3 erzeugte Druck, mit dem das Brühwasser durch die Brühkammer 12 geleitet wird, beträgt typischerweise, ohne dass die Erfindung aber hierauf beschränkt wäre, etwa 8 bis 12 bar. Dieser Druck des Brühwassers fällt bei herkömmlichen Kaffeemaschinen über dem in der Brühkammer 12 verdichteten Kaffeekuchen 13 ab. Die Geschwindigkeit, mit der das Brühwasser durch das Kaffeepulver 13 läuft, hängt dabei entscheidend vom Mahlgrad des Kaffeepulvers, der Kaffeesorte, der Menge und dem Verdichtungsgrad ab. An der hier gezeigten Brühvorrichtung erfolgt hingegen der Druckabfall vor allem am hinter der Brühkammer 12 angeordneten Gegendruckventil 9, mit dem über die Steuerung 10 gezielt die Durchlaufgeschwindigkeit bzw. Durchflussrate des Pulvers durch die Brühkammer 12 gesteuert werden, und zwar in Abhängigkeit der tatsächlichen, gemessenen Durchflussrate im Durchflusssensor 7.

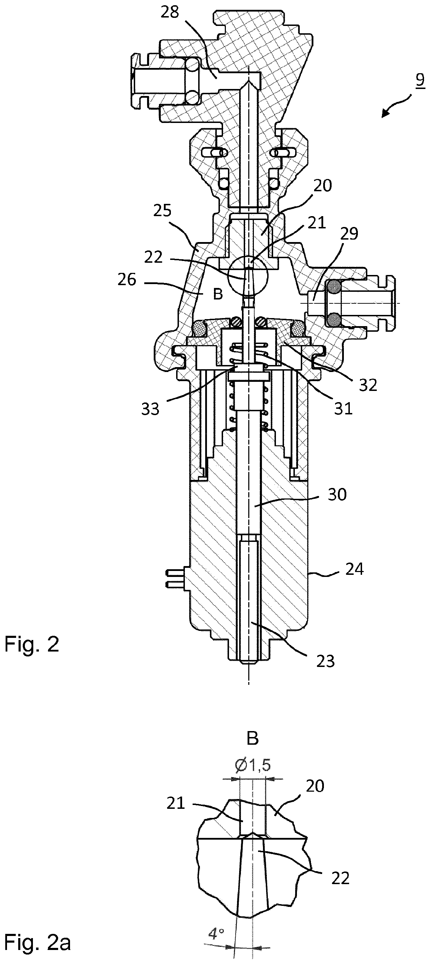

Im Ausführungsbeispiel ist das Gegendruckventil 9 als Schrittmotor getriebenes Nadelventil ausgebildet, welches in Figur 2 in einer Schnittzeichnung dargestellt ist. Kernstück des Nadelventils ist ein Ventileinsatz 20 mit einer durchgehenden Ventilöffnung 21, in die eine Ventilnadel 22 eintaucht. Diese sind in einem Ausschnitt B in Figur 2a vergrößert herausgezeichnet. Die Ventilöffnung 21 hat in den Ausführungsbeispielen einen Durchmesser von 1,5 mm. Die Ventilnadel 22 weist einen sehr steilen Neigungswinkel von lediglich 4° auf.

Die Ventilnadel 22 wird von einer Spindel 23 getragen, die von einem Schrittmotor 24 angetrieben wird. Ventileinsatz 20 und Ventilnadel 22 sind in einem Ventilgehäuse 25 untergebracht, mit dem der Schrittmotor 24 über einen Bajonettverschluss verbunden ist. Die von dem Ventilgehäuse 25 gebildete Ventilkammer 26 wird nach unten hin zu dem Schrittmotor 24 abgedichtet. Am oberen Ende der Ventilkammer 26 befindet sich ein Zulauf 28, der mit der Brühgruppe 1 verbunden wird. Seitlich am Ventilgehäuse 25 befindet sich ein Auslass 29, der mit dem Auslauf 4 der Kaffeemaschine verbunden wird.

Die Spindel 23 wirkt mit einer Spindelmutter 30 zusammen, die am Gehäuse des Schrittmotors 24 gehalten wird. Eine Vorspannfeder 31, die sich an einer Stützplatte 32 an der Unterseite des Ventilgehäuses 25 und einem mit der Ventilnadel 22 verbundenen Bund 33 abstützt, spannt die Ventilnadel 22 bzw. Spindel 23 gegen die Spindelmutter 30 vor und hebt somit ein mögliches Spiel im Spindelantrieb auf.

Ventilgehäuse 25, Ventileinsatz 20 und Ventilnadel 22 bestehen aus hygienischen Gründen aus Kunststoff. Für Ventileinsatz und Ventilnadel haben sich insbesondere hochtemperaturbeständige thermoplastische Kunststoffe, insbesondere PEEK (Polyetheretherketon) bewährt. Alternativ können Ventileinsatz und Ventilnadel auch aus Edelstahl hergestellt sein. Das Ventilgehäuse kann beispielsweise aus PPS oder PPSU (Polyphenylensulfid bzw. Polyphenylensulfon) bestehen.

Um ein geeignetes Ventilverhalten zu erreichen, wird eine Ventilnadel mit einem kegelförmigen Profil verwendet, wobei der Öffnungswinkel zwischen 2 und 15° beträgt. Das beste Regelverhalten wurde bei einer Ventilnadel mit Kegelprofil mit einem Öffnungswinkel von 4° ermittelt, die im Ausführungsbeispiel zum Einsatz kommt.

Der Schrittmotor 24 kann wahlweise in Vollschritten oder in Achtelschritten angesteuert werden. Bei der gewählten Spindelübersetzung entspricht ein Vollschritt einem Hub von 0,021 mm. Der Spindelhub zwischen vollständigem Öffnen und Schließen des Nadelventils beträgt etwa 100 Vollschritte. Zum schnellen Öffnen und Schließen wird der Schrittmotor in Vollschritten angesteuert. Im Regelbetrieb wird dagegen auf Achtelschritte umgestellt. Der Schrittmotor kann außerdem mit unterschiedlichem Spulenstrom, 50 und 100 mA, angesteuert werden. Zum Öffnen und im Regelbetrieb wird der Schrittmotor jeweils mit vollem Spulenstrom angesteuert, beim Schließen des Nadelventils wird der Spulenstrom abgesenkt, um das Ventil mit geringerer Kraft zu schließen, damit es aufgrund der großen Nadelsteilheit nicht zu einem Festsitzen der Ventilnadel 22 in der Ventilöffnung 21 kommt.

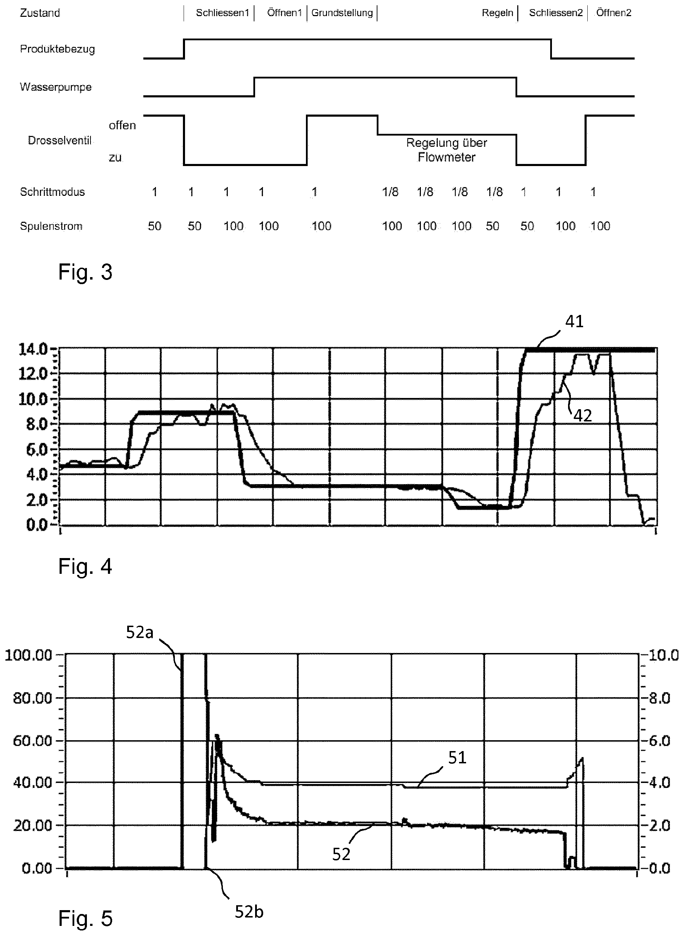

In Figur 3 ist der zeitliche Ablauf bei der Ansteuerung der Brühvorrichtung gezeigt. Vor Beginn eines Produktbezugs ist das Gegendruckventil vollständig geöffnet. Beginnt ein Produktbezug, indem ein Benutzer über entsprechende Eingabemittel eine Produktauswahl durchführt und den Zubereitungsprozess startet, so wird das Gegendruckventil geschlossen. Das Schließen erfolgt wie erläutert im Vollschrittmodus bei reduziertem Spulenstrom. Im nächsten Schritt läuft die Wasserpumpe an und erzeugt einen Wasserdruck. Heißwasser vom Boiler 2 fließt nun zur Brühgruppe 1 bis diese gefüllt ist. Das Gegendruckventil 9 bleibt solange geschlossen. Kommt der Wasserfluss zum Stillstand, weil die Brühgruppe 1 mit Wasser befüllt, wird anschließend das Gegendruckventil 9 geöffnet und der Brühvorgang beginnt.

Nun wird die Schrittmotoransteuerung auf Achtelschrittmodus umgeschaltet und die Regelung des Gegendruckventils erfolgt über die Steuerung 10 anhand der Messwerte des Durchflusssensors 7. Nach Beendigung des Brühvorgangs schaltet die Wasserpumpe ab. Außerdem wird das Gegendruckventil geschlossen. Hierdurch wird verhindert, dass gegebenenfalls noch in den Leitungen befindliche Restflüssigkeit aus dem Auslauf 4 der Kaffeemaschine nachtropft. Der Produktbezug ist nun beendet und dem Benutzer wird über eine grafische Benutzerschnittstelle angezeigt, dass er den Getränkebehälter mit dem angewählten Getränk entnehmen kann.

Schließlich wird eine vorbestimmte Zeitspanne nach Beendigung des Produktbezugs das Drosselventil wieder vollständig geöffnet. Dies hat den Hintergrund, dass aufgrund der großen Nadelsteilheit und thermischen Ausdehnung von Ventileinsatz 20 und Ventilnadel 22 die Ventilnadel 22 in der Ventilöffnung 21 durch sogenanntes Aufschrumpfen festsitzen könnte. Schlimmstenfalls wäre das Ventil nach dem Abkühlen nicht mehr zu öffnen. Um dies zu verhindern, wird das Ventil wie beschrieben nach Beendigung des Produktbezugs, aber rechtzeitig vor einem zu starken Abkühlen geöffnet.

In Figur 4 ist beispielhaft für manuell eingestellte Sollwerte das Folgeverhalten des Ist-Werts für die Durchflussrate gezeigt. Die fett durchgezogene Linie 41 stellt den über die Ventilöffnung des Gegendruckventils 9 eingestellten Soll-Wert für die Durchflussrate in Milliliter pro Sekunde (ml/s) dar. Die dünne Linie 42 zeigt die vom Durchflusssensor 7 gemessenen Ist-Werte. Ein geringfügiger Zeitversatz von etwa 0,8 Sekunden zwischen der Soll-Wert-Kurve 41 und der Ist-Wert-Kurve 42 liegt darin begründet, dass der Durchflusssensor 7 im Kaltwasserbereich vor dem Boiler 2 angeordnet ist. Alternativ könnte ein Durchflusssensor auch direkt vor oder direkt hinter der Brühgruppe 1 angeordnet werden.

In Figur 5 sind der zeitliche Verlauf der Regelkurve und der Ist-Wert der vom Durchflusssensor gemessenen Durchflussrate aufgetragen. Die linke Ordinate bezieht sich auf die Stellung des Nadelventils in Schritten des Schrittmotors. Die zugehörige Ventilstellung ist als Kurve 51 dargestellt. Die Ist-Wert-Kurve 52 für die Durchflussrate bezieht sich auf die rechte Ordinate in Milliliter pro Sekunde (ml/s).

Zu Beginn eines Produktbezugs mit Einschalten der Wasserpumpe schnellt die Durchflussrate zunächst in die Höhe und erreicht in einem Bereich 52a einen Spitzenwert, ohne dass das Gegendruckventil 9 geöffnet wäre. Dieser Bereich, bis die Durchflussrate zu einem Zeitpunkt 52b wieder auf null zurückgegangen ist, bezieht sich auf das Füllen der Brühgruppe 1. Sobald die Brühgruppe 1 gefüllt ist, öffnet die Steuerung 10 das Ventil 9 so weit, bis wieder ein Durchfluss einsetzt. Aufgrund der elastischen Eigenschaften im Ventil und einer Vielzahl weiterer Effekte, wie einem möglichen Festklemmen der Ventilnadel bis zum Öffnen, sind zum ersten Öffnen des Gegendruckventils 9 relativ viele Motorschritte erforderlich. Je nach Betriebssituation des Nadelventils 9 können dies durchaus 20 bis 40 Schrittmotorschritte sein, weshalb dieses erste Öffnen vorzugsweise auch mit voller Schrittweite ausgeführt werden kann.

Nach dem ersten Einsetzen eines Flüssigkeitsstroms durch die Brühkammer 12 muss das Gegendruckventil 9 sofort wieder ein Stück geschlossen werden. Die Regelung reagiert in diesem ersten Anfangsbereich sehr sensibel. Thermische Ausdehnungen und die Elastizität des Ventils dürften nach Erkenntnissen der Anmelderin der Grund dafür sein, dass die Regelung dieses oszillierende Verhalten zeigt, bis sie sich stabilisiert hat. Aus diesem Grund ist es vorteilhaft, für dieses Anfangsverhalten nach Einsetzen eines Volumenstroms eine selbstlernende Regelung zu implementieren, welche aus vorangegangenen Brühvorgängen ein Maß dafür ermittelt, um wie viele Schritte das Nadelventil 9 nach dem ersten Öffnen und Einsetzen des Volumenstroms wieder zurückgeregelt bzw. geschlossen werden muss.

Mit dem beschriebenen Brühverfahren können Kaffeegetränke mit verschiedenen Gegendrücken und damit unterschiedlichen Geschmacksausprägungen gebrüht werden. Der Gegendruck kann während des Brühvorgangs in Abhängigkeit des gemessenen Volumenstroms verändert werden. Damit kann beispielsweise auf einem konstanten, vorgegebenen bzw. vorgebbaren Auslaufs-Volumenstrom geregelt werden. Wegen des nicht deterministischen Einschwingverhaltens hat es sich jedoch als besonders vorteilhaft erwiesen, auf eine konstante Auslaufzeit zu regeln, also durch Öffnen oder Schließen des Gegendruckventils die Durchlaufgeschwindigkeit des Brühwassers in Abhängigkeit des bereits durchgelaufenen bzw. noch durchzuleitenden Brühwassers gezielt zu beschleunigen oder zu verlangsamen, sodass insgesamt die vorgegebene Gesamtdurchflusszeit für eine für das gewählte Getränk vorgegebene Gesamtmenge an Brühwasser erreicht wird. Auf diese Weise kann sichergestellt werden, dass alle Getränke desselben Getränketyps, beispielsweise Espresso oder Kaffee Lungo mit jeweils derselben Gesamtdurchlaufzeit zubereitet werden. Dies führt nach Erkenntnissen der Erfindung zu einer sehr hohen Reproduzierbarkeit und Konstanz der Kaffeequalität für eine jeweils vorgegebene Getränkegetränkeart.

Für jede Getränkeart lässt sich eine nach den Kundenwünschen optimale Durchlaufzeit ermitteln bzw. austesten, mit der im Vergleich zu herkömmlichen Kaffeemaschinen die Kaffeequalität erheblich verbessert ist. Daneben lässt sich durch Optimierung der Auslaufzeit eine Verringerung der verwendeten Kaffeemenge zumindest teilweise kompensieren, sodass bei vergleichsweise gleichbleibender Qualität eine Einsparung von benötigtem Kaffee erzielt wird. Schließlich wirken sich Unterschiede im Mahlgrad des Kaffees nicht oder allenfalls geringfügig auf die Kaffeequalität des erfindungsgemäß gebrühten Kaffeegetränks aus, sodass weniger aufwendige Mahlwerke in erfindungsgemäßen Kaffeevollautomaten eingesetzt werden können. Schließlich haben Untersuchungen der Anmelderin die erstaunliche Erkenntnis erbracht, dass mit etwas gröberen Mahlungen sogar leicht bessere sensorische Ergebnisse erzielt werden als mit der bisher verwendeten sehr feinen Mahlung, insbesondere im Bereich der Getränkesorte Espresso.

Je länger mit bei dem erfindungsgemäßen Brühverfahren die Durchflusszeit gewählt wird, desto höher ist die Extraktionsausbeute der nichtflüchtigen Inhaltsstoffe im zubereiteten Kaffeegetränk und desto stärker ist die sensorische Wahrnehmung in Bezug auf die Geschmackseigenschaften (Säure, Bitterkeit) sowie auf die Adstringenz. Die ermöglicht eine gezielte Steuerung und Optimierung der erfindungsgemäß erzeugten Kaffeegetränke.

Alternativ zu dem im Ausführungsbeispiel verwendeten Nadelventil können auch andere regelbare Ventile als Gegendruckventil im Rahmen der vorliegenden Erfindung eingesetzt werden, beispielsweise ein Zahnraddrosselventil. Ebenso liegt es im Rahmen der vorliegenden Erfindung, als Gegendruckventil ein getaktetes Magnetventil einzusetzen, welches in schneller Folge, vorzugsweise mit einer Frequenz von größenordnungsmäßig etwa 10 Hz, öffnet und schließt und so einen mittleren Volumenstrom durch das intermittierend betriebene Magnetventil bewirkt. Der mittlere Volumenstrom lässt sich hierbei durch Vorgabe einer Frequenz und/oder eines Tastverhältnisses zwischen geöffnetem und geschlossenem Zustand einstellen.

Ebenso liegt es im Rahmen der vorliegenden Erfindung, alternativ oder kumulativ zu einer Gegendruckregelung den von der Wasserpumpe 3 erzeugten Druck zu regeln. Dies kann beispielsweise durch Pulsweitenmodulation der Betriebsspannung erfolgen.

In Figur 6 ist ein weiteres Ausführungsbeispiel einer Brühvorrichtung gezeigt. Im Unterschied zu der in Figur 1 gezeigten Brühvorrichtung ist hier die eine Brüheinheit 1' für eine Portionskaffeemaschine zum Betrieb mit Kaffeekapseln 14 ausgelegt. Die Brühkammer 12' ist zur Aufnahme von Kaffeekapseln ausgebildet. Solche Kaffeekapseln können aus Aluminium oder Kunststoff gefertigt sein und werden ab Werk mit portioniertem Kaffeepulver 13' vorgefüllt und verschlossen, beispielsweise wie in Figur 6 gezeigt mittels einer Membrane an der Unterseite der Kapsel 14.

Die Brühkammer 12' ist im Ausführungsbeispiel in an sich bekannter Weise als Kapselkäfig ausgebildet, der eine eingelegte Kaffeekapsel 14 umschließt. Auf der Oberseite wird die Kapsel 14 von einem oder mehreren Dornen 16 durchstochen. Die kann automatisiert oder manuell erfolgen. Auf der Unterseite wird die Kapsel gegen eine mit Durchlässen versehene Trägerplatte 17, eine sogenannte Pyramidenplatte, gedrückt. Nach dem Starten des Brühvorganges wird heißes Wasser aus dem Heißwasserboiler 2 unter Druck in die Kapsel 14 gepresst. Wird der Druck innerhalb der Kapsel 14 hoch genug, reißt die Membrane 15 an der Unterseite der Kapsel 14 ein und das innerhalb der Kapsel 13 gebrühte Kaffeegetränk kann durch die nun perforierte Membrane 15 und die Durchlässe in der Pyramidenplatte 17 hindurch Richtung Auslauf 4 fließen. Kummulativ oder alternativ zu dem Heißwasserboiler 2 kann im Wasserzulauf der Brüheinheit 1' ein Durchlauferhitzer 11' angeordnet sein, mit dem das Brühwasser erhitzt bzw. nacherhitzt wird.

Wie im ersten Ausführungsbeispiel auch, ist in der Auslassleitung zwischen Brühkammer 12' und Auslauf 4 ein Gegendruckventil 9 angeordnet, mit dem über die Steuerung 10 der Durchfluss in Abhängigkeit der vom Durchflusssensor 7 gemessenen Werte gesteuert werden kann. Auch in diesem Fall kann mittels einer Gegendruck-Flussregelung auf eine vorgegebene Durchflussrate, vorzugsweise aber auf eine vorgegebene Gesamtdurchflusszeit einer vorgegebenen Brühwassermenge geregelt werden.

Bei industriell hergestellten und vorbefüllten Kaffeekapseln 14 spielen zwar weniger die Unterschiede im Mahlgrad des gelieferten Kaffeepulvers 13' eine wesentliche Rolle, aber auch bei einer Kapselkaffeemaschine kann durch die Einstellung einer für alle nacheinander zubereiteten Kaffeegetränke gleichen Gesamtdurchflusszeit eine wesentlich höhere Konstanz der sensorischen Eigenschaften bzw. der Qualität der ausgegebenen Kaffeegetränke sichergestellt werden. Außerdem kann durch Variation bzw. Optimierung der Gesamtdurchflusszeit eine Anpassung der Geschmackseigenschaften an die Präferenzen eines Benutzers erfolgen.

Selbstverständlich kann das erfindungsgemäße Brühverfahren bei jeglichen Arten von Portionskaffeemaschinen, sowohl solchen für den Betrieb mit Kaffeekapseln als auch solchen für den Betrieb mit Kaffeepads, zum Einsatz kommen. Ebenso kann im Rahmen des erfindungsgemäßen Brühverfahrens die Menge an durchzuleitendem Brühwasser verändert und die Gesamtdurchflusszeit entsprechend angepasst werden, beispielsweise zur Ausgabe von unterschiedlichen Kaffeegetränken oder auch für Einzel- bzw. Doppelportionierung.

## Patentansprüche

1. Verfahren zum Zubereiten eines Kaffeegetränks, bei dem in einem Brühvorgang eine vorgebbare Gesamtmenge an Brühwasser durch eine Menge an Kaffeepulver (13) geleitet wird, wobei
- für den Brühvorgang eine Gesamtdurchflusszeit vorgegeben ist, in welcher die Gesamtmenge an Brühwasser durch das Kaffeepulver (13) geleitet wird,
- während des Brühvorgangs kontinuierlich oder zumindest mehrmals ein Wert für den Volumenstrom des Brühwassers bestimmt wird, und aus den gemessenen Volumenstromwerten die Menge des bereits durchgeleiteten oder des noch durchzuleitenden Brühwassers ermittelt wird,
- die Durchleitung des Brühwassers unter Druck erfolgt und eine aktive Flussregelung des Brühwassers durchgeführt wird, indem mittels eines einstellbaren Gegendruckventils (9) ein Gegendruck angelegt wird, **dadurch gekennzeichnet,**
- **dass** während des Brühvorgangs die Durchflussrate des Brühwassers zur Erreichung der Gesamtdurchflusszeit in Abhängigkeit der Menge des bereits durchgeleiteten oder des noch durchzuleitenden Brühwassers derart geregelt wird, dass der Brühvorgang in der vorgegebenen Gesamtdurchflusszeit durchgeführt wird, indem je nachdem, wieviel Brühwasser zur Erreichung der vorgebbare Gesamtmenge in der verbleibenden Zeitspanne bis zum Erreichen der vorgegebenen Gesamtdurchflusszeit noch durch die Brühkammer durchgeleitet werden muss, das Gegendruckventil weiter geöffnet oder weiter geschlossen wird, um den Volumenstrom zu erhöhen bzw. zu verringern.

2. Verfahren nach Anspruch 1, bei dem aus einem oder mehreren unmittelbar vorangegangenen Brühvorgängen eine Größe ermittelt, um die ein Flüssigkeitsdurchfluss durch das Gegendruckventil (9) in einer Startphase nach Beginn des Brühvorgangs gedrosselt werden muss, um die Gesamtdurchflusszeit zu erreichen.

3. Verfahren nach einem der vorangehenden Ansprüche, bei dem eine Flussregelung des Brühwassers zusätzlich durch Regeln des Drucks erfolgt.

4. Verfahren nach einem der vorangehenden Ansprüche, bei dem eine Flussregelung des Brühwassers automatisiert erfolgt.

5. Verfahren nach einem der vorangehenden Ansprüche, bei dem das Kaffeepulver (13) in eine Brühkammer (12) eingebracht wird und das Brühwasser in der vorgegebenen Gesamtdurchlaufzeit durch die Brühkammer (12) geleitet wird und bei dem die Durchlaufzeit durch Ansteuerung des in Durchflussrichtung hinter der Brühkammer (12) angeordneten Gegendruckventils (9) geregelt wird.

6. Brühvorrichtung zum Zubereiten eines Kaffeegetränkes durch Durchleiten einer vorgebbaren Gesamtmenge an Brühwasser während eines Brühvorgangs durch eine Menge an Kaffeepulver (13) umfassend
- eine Steuerung, mittels der für den Brühvorgang eine Gesamtdurchflusszeit vorgegeben oder vorgebbar ist, in welcher die Gesamtmenge an Brühwasser durch eine Menge an Kaffeepulver (13) geleitet wird,
- eine Messeinrichtung (7) zur Bestimmung eines Volumenstroms des Brühwassers,
- eine druckbeaufschlagbare Brühkammer (12) zur Aufnahme des Kaffeepulvers (13) und zum Durchleiten des Brühwasser während des Brühvorgangs,
- einen Druckerzeuger zum Erzeugen eines Druckes, mit dem das Brühwasser zum Durchleiten durch die Brühkammer (12) druckbeaufschlagt wird, und
- ein hinter der Brühkammer angeordnetes, einstellbares Gegendruckventil zur Erzeugung eines Gegendrucks;
**dadurch gekennzeichnet, dass** die Steuerung ausgebildet ist, kontinuierlich oder zumindest mehrmals aus gemessenen Volumenstromwerten die Menge des bereits durchgeleiteten oder des noch durchzuleitenden Brühwassers zu ermitteln und in Abhängigkeit davon während des Brühvorgangs die Durchflussrate des Brühwassers über das Gegendruckventil derart zu regeln wird, dass der Brühvorgang in der vorgegebenen Gesamtdurchflusszeit durchgeführt wird, indem je nachdem, wieviel Brühwasser zur Erreichung der vorgegebenen Gesamtmenge in der verbleibenden Zeitspanne bis zum Erreichen der vorgegebenen Gesamtdurchflusszeit noch durch die Brühkammer durchgeleitet werden muss, das Gegendruckventil weiter geöffnet oder weiter geschlossen wird, um den Volumenstrom zu erhöhen bzw. zu verringern.

7. Brühvorrichtung nach Anspruch 6, bei der das Gegendruckventil als motorisch betriebenes Nadelventil (9) ausgebildet ist und die Steuerung (10) durch Ansteuerung eines Antriebsmotors (24), vorzugsweise eines Schrittmotors, das Nadelventil (9) weiter öffnet oder schließt.

8. Brühvorrichtung nach Anspruch 6 oder 7, bei der die Steuerung eingerichtet ist, aus einem oder mehreren unmittelbar vorangegangenen Brühvorgängen eine Größe zu ermitteln, um die ein Flüssigkeitsdurchfluss durch das Gegendruckventil (9) in einer Startphase nach Beginn des Brühvorgangs gedrosselt werden muss, um die Gesamtdurchflusszeit zu erreichen, und bei der die Steuerung in der Startphase eines neuen Brühvorgangs das Gegendruckventil (9) auf die so ermittelte Größe einstellt und ausgehend davon mit der Regelung der Durchflussrate beginnt.

9. Brühvorrichtung nach Anspruch 8, bei der das Gegendruckventil über einen Schrittmotor angetrieben ist und die von der Steuerung ermittelte Größe eine Schrittanzahl ist, um die das Gegendruckventil zu Beginn des Brühvorgangs geöffnet wird.

10. Kaffeemaschine mit einer Brühvorrichtung nach einem der Ansprüche 6 bis 9, welche vorzugsweise ein Mahlwerk zum Mahlen von Kaffeebohnen zu Kaffeepulver aufweist oder als Portionskaffeemaschine, weiter vorzugsweise als Kapselkaffeemaschine, ausgebildet ist.

## Claims

1. Method for preparing a coffee beverage, in which in a brewing operation a specifiable total quantity of brewing water is conducted through a quantity of coffee powder (13), wherein
- a total throughflow time for the brewing operation is specified, during which time the total quantity of brewing water is conducted through the coffee powder (13),
- a value for the volumetric flow rate of the brewing water is determined continuously or at least multiple times during the brewing operation and, on the basis of the measured volumetric flow rate values, the quantity of brewing water that has already been conducted through or is still to be conducted through is ascertained,
- the brewing water is conducted through under pressure and active flow regulation of the brewing water is carried out by application of a counter-pressure by means of an adjustable counter-pressure valve (9),
**characterised in that**
- to achieve the total throughflow time, during the brewing operation the throughflow rate of the brewing water is regulated in dependence upon the quantity of brewing water that has already been conducted through or is still to be conducted through in such a way that the brewing operation is carried out in the specified total throughflow time, this being effected by further opening or further closing of the counter-pressure valve in order to increase or to reduce, respectively, the volumetric flow rate in dependence upon how much brewing water still needs to be conducted through the brewing chamber to achieve the specifiable total quantity in the time period remaining until the specified total throughflow time is reached.

2. Method according to claim 1, wherein on the basis of one or more immediately preceding brewing operations there is ascertained an amount by which a flow of fluid through the counter-pressure valve (9) needs to be throttled in a start phase after commencement of the brewing operation in order to achieve the total throughflow time.

3. Method according to either one of the preceding claims, wherein flow regulation of the brewing water is additionally effected by regulating the pressure.

4. Method according to any one of the preceding claims, wherein flow regulation of the brewing water is automated.

5. Method according to any one of the preceding claims, wherein the coffee powder (13) is introduced into a brewing chamber (12) and the brewing water is conducted through the brewing chamber (12) in the specified total throughflow time, and wherein the throughflow time is regulated by actuation of the counter-pressure valve (9) arranged downstream of the brewing chamber (12) in the throughflow direction.

6. Brewing apparatus for preparing a coffee beverage by conducting a specifiable total quantity of brewing water through a quantity of coffee powder (13) during a brewing operation, comprising
- a controller by means of which a total throughflow time for the brewing operation is specified or specifiable, during which time the total quantity of brewing water is conducted through a quantity of coffee powder (13),
- a measuring device (7) for determining a volumetric flow rate of the brewing water,
- a pressurisable brewing chamber (12) for receiving the coffee powder (13) and for conducting through the brewing water during the brewing operation,
- a pressure generator for generating a pressure with which the brewing water is pressurised for being conducted through the brewing chamber (12), and
- an adjustable counter-pressure valve, arranged downstream of the brewing chamber, for generating a counter-pressure;
**characterised in that**
the controller is configured to ascertain continuously or at least multiple times, on the basis of the measured volumetric flow rate values, the quantity of brewing water that has already been conducted through or is still to be conducted through, and, in dependence thereon, during the brewing operation to regulate the throughflow rate of the brewing water via the counter-pressure valve in such a way that the brewing operation is carried out in the specified total throughflow time, this being effected by further opening or further closing of the counter-pressure valve in order to increase or to reduce, respectively, the volumetric flow rate in dependence upon how much brewing water still needs to be conducted through the brewing chamber to achieve the specified total quantity in the time period remaining until the specified total throughflow time is reached.

7. Brewing apparatus according to claim 6, wherein the counter-pressure valve is in the form of a motor-operated needle valve (9) and the controller (10) further opens or closes the needle valve (9) by actuation of a drive motor (24), preferably a stepper motor.

8. Brewing apparatus according to claim 6 or 7, wherein the controller is configured to ascertain, on the basis of one or more immediately preceding brewing operations, an amount by which a flow of fluid through the counter-pressure valve (9) needs to be throttled in a start phase after commencement of the brewing operation in order to achieve the total throughflow time, and wherein in the start phase of a new brewing operation the controller adjusts the counter-pressure valve (9) to the amount so ascertained and begins with the regulation of the throughflow rate on that basis.

9. Brewing apparatus according to claim 8, wherein the counter-pressure valve is driven by means of a stepper motor and the amount ascertained by the controller is a number of steps by which the counter-pressure valve is opened on commencement of the brewing operation.

10. Coffee machine having a brewing apparatus according to any one of claims 6 to 9, which preferably has a grinding mechanism for grinding coffee beans into coffee powder or is in the form of a portion coffee machine, more preferably in the form of a capsule coffee machine.

## Revendications

1. Procédé de préparation d'une boisson à base de café, dans lequel une quantité totale prédéfinissable d'eau d'infusion est passée à travers une quantité de café en poudre (13) lors d'un processus d'infusion,
dans lequel
- pour le processus d'infusion, un temps de passage total est spécifié, pendant lequel la quantité totale d'eau d'infusion est passée à travers la poudre de café (13),
- une valeur du débit volumique de l'eau d'infusion est déterminée en continu ou au moins plusieurs fois pendant le processus d'infusion, et la quantité d'eau d'infusion déjà passée ou encore à passer est déterminée à partir des valeurs de débit volumique mesurées,
- l'eau d'infusion est passée sous pression et une régulation de flux active de l'eau d'infusion est effectuée en appliquant une contre-pression au moyen d'une soupape de contre-pression réglable (9),
**caractérisé en ce que**
- pendant le processus d'infusion, le débit de l'eau d'infusion nécessaire pour atteindre le temps de passage total est régulé en fonction de la quantité d'eau d'infusion déjà passée ou encore à passer de telle sorte que le processus d'infusion est effectué dans le temps de passage total prédéfini en ouvrant davantage ou fermant davantage la soupape de contre-pression, afin d'augmenter ou de diminuer le débit volumique, en fonction de la quantité d'eau d'infusion qui doit encore être passée à travers la chambre d'infusion pour atteindre la quantité totale prédéfinie dans le laps de temps restant jusqu'à l'atteinte du temps de passage total prédéfini.

2. Procédé selon la revendication 1, dans lequel une quantité dont un passage de liquide à travers la soupape de contre-pression (9) doit être étranglé dans une phase de démarrage après le début du processus d'infusion pour atteindre le temps de passage total est déterminée à partir d'un ou plusieurs processus d'infusion immédiatement précédents.

3. Procédé selon l'une des revendications précédentes, dans lequel une régulation de flux de l'eau d'infusion est effectuée en plus par régulation de la pression.

4. Procédé selon l'une des revendications précédentes, dans lequel une régulation de flux de l'eau d'infusion est effectuée de manière automatisée.

5. Procédé selon l'une des revendications précédentes, dans lequel la poudre de café (13) est introduite dans une chambre d'infusion (12) et l'eau d'infusion est passée à travers la chambre d'infusion (12) dans le temps de passage total prédéfini et dans lequel le temps de passage est régulé en actionnant la soupape de contre-pression (9) disposée en aval de la chambre d'infusion (12) dans le sens de passage.

6. Dispositif d'infusion pour préparer une boisson au café en faisant passer une quantité totale prédéfinissable d'eau d'infusion à travers une quantité de café en poudre (13) pendant un processus d'infusion, comprenant :
- une unité de commande, au moyen de laquelle un temps de passage total pour le processus d'infusion, pendant lequel la quantité totale d'eau d'infusion est passée à travers une quantité de café en poudre (13), est ou peut être prédéfini,
- un moyen de mesure (7) pour déterminer un débit volumique de l'eau d'infusion,
- une chambre d'infusion pouvant être mise sous pression (12) pour recevoir la poudre de café (13) et pour faire passer l'eau d'infusion pendant le processus d'infusion,
- un générateur de pression pour générer une pression avec laquelle l'eau d'infusion est mise sous pression pour passer à travers la chambre d'infusion (12), et
- une soupape de contre-pression réglable disposée en aval de la chambre d'infusion pour générer une contre-pression ;
**caractérisé en ce que**
l'unité de commande est conçue pour déterminer en continu ou au moins plusieurs fois, à partir des valeurs de débit volumique mesurées, la quantité d'eau d'infusion déjà passée ou encore à passer et, en fonction de cela, pour réguler le débit de l'eau d'infusion par la soupape de contre-pression pendant le processus d'infusion de telle sorte que le processus d'infusion s'effectue dans le temps de passage total prédéfini en ouvrant davantage ou fermant davantage la soupape de contre-pression, afin d'augmenter ou de diminuer le débit volumique, en fonction de la quantité d'eau d'infusion qui doit encore être passée à travers la chambre d'infusion pour atteindre la quantité totale prédéfinie dans le laps de temps restant jusqu'à l'atteinte du temps de passage total prédéfini.

7. Dispositif d'infusion selon la revendication 6, dans lequel la soupape de contre-pression est réalisée sous la forme d'une soupape à pointeau motorisée (9) et l'unité de commande (10) ouvre ou ferme davantage la soupape à pointeau (9) en actionnant un moteur d'entraînement (24), de préférence un moteur pas à pas.

8. Dispositif d'infusion selon la revendication 6 ou 7, dans lequel l'unité de commande est conçue pour déterminer, à partir d'un ou plusieurs processus d'infusion immédiatement précédents, une quantité dont un passage de liquide à travers la soupape de contre-pression (9) doit être étranglé dans une phase de démarrage après le début du processus d'infusion pour atteindre le temps de passage total, et dans lequel l'unité de commande règle la soupape de contre-pression (9) sur la quantité ainsi déterminée dans la phase de démarrage d'un nouveau processus d'infusion et, sur cette base, commence à réguler le débit.

9. Dispositif d'infusion selon la revendication 8, dans lequel la soupape de contre-pression est entraînée par un moteur pas à pas et la quantité déterminée par l'unité de commande est un nombre de pas dont la soupape de contre-pression est ouverte au début du processus d'infusion.

10. Machine à café dotée d'un dispositif d'infusion selon l'une des revendications 6 à 9, qui présente de préférence un moulin pour moudre les grains de café en poudre de café ou qui est réalisée sous la forme d'une machine à café en portions, davantage de préférence sous la forme d'une machine à café en capsules.
